# EUROPÄISCHE PATENTSCHRIFT

(11) **EP 3 500 477 B1**
(45) Veröffentlichungstag und Bekanntmachung des Hinweises auf die Patenterteilung: **22.04.2020**
(21) Anmeldenummer: 17752400.6
(22) Anmeldetag: 17.08.2017
(51) Int. Cl.: B62D 5/04

(54) **VERFAHREN ZUM BETRIEB EINES ELEKTRISCHEN SERVOLENKSYSTEMS EINES KRAFTFAHRZEUGS UND ELEKTRISCHES SERVOLENKSYSTEM**
METHOD FOR OPERATING AN ELECTRICAL POWER STEERING SYSTEM OF A MOTOR VEHICLE, AND ELECTRICAL POWER STEERING SYSTEM
PROCÉDÉ POUR FAIRE FONCTIONNER UN SYSTÈME DE DIRECTION ASSISTÉE ÉLECTRIQUE D'UN VÉHICULE AUTOMOBILE ET SYSTÈME DE DIRECTION ASSISTÉE ÉLECTRIQUE

(30) Priorität: 18.08.2016 DE 102016215506
(43) Veröffentlichungstag der Anmeldung: 26.06.2019
(73) Patentinhaber: Volkswagen Aktiengesellschaft, 38440 Wolfsburg (DE); Robert Bosch GmbH, 70442 Stuttgart (DE)
(72) Erfinder: ZIENTEK, Jens, 39365 Sommersdorf OT Marienborn (DE); GROSS, Marcel, 73529 Schwäbisch Gmünd (DE)
(74) Vertreter: Zucker, Volker
(86) Internationale Anmeldenummer: PCT/EP2017/070844
(87) Internationale Veröffentlichungsnummer: WO 2018/033597

(56) Entgegenhaltungen:
- EP-A1- 2 918 478
- EP-A2- 2 127 997
- EP-A2- 2 821 318
- WO-A1-2016/005669
- DE-A1- 10 050 377

## Beschreibung

Die Erfindung betrifft ein Verfahren zum Betrieb eines elektrischen Servolenksystems eines Kraftfahrzeugs, ein elektrisches Servolenksystem, ein Computerprogramm und ein Steuergerät eines Servolenksystems.

Nahezu alle modernen Kraftfahrzeuge sind mit einem elektrischen Servolenksystem ausgestattet, welches den Fahrer des Kraftfahrzeugs beim Lenken mittels einer Lenkunterstützung unterstützt.

Aus der DE 10 2012 107 595 B4 ist ein Verfahren zur Bestimmung eines Soll-Vorgabewerts für das von einem elektrischen Servomotor abzugebende Motormoment in einer Hilfskraftlenkung für ein Kraftfahrzeug bekannt, wobei in Abhängigkeit einer Fahrzeuggeschwindigkeit und eines Handmoments ein Basis-Bemessungswert ermittelt wird, wobei in Abhängigkeit des Basis-Bemessungswerts und des Handmoments ein in seiner Steigung begrenzter Stabil-Bemessungswert ermittelt wird, in Abhängigkeit eines Differenzwerts zwischen dem Basis-Bemessungswert und dem Stabil-Bemessungswert ein Langsam-Bemessungswert ermittelt wird, und wobei der Stabil-Bemessungswert und der Langsam-Bemessungswert zur Bildung des Soll-Vorgabewerts für den Servomotor verwendet wird.

Aus der DE 10 2007 002 292 A1 ist ein Verfahren zum Betrieb eines elektronischen Servolenksystems eines Kraftfahrzeugs bekannt, bei welchem mittels einer Lenkhandhabe ein Lenkradwinkel als Maß für einen gewünschten Radlenkwinkel für wenigstens ein lenkbares Rad des Kraftfahrzeugs vorgegeben wird und bei welchem ein elektrischer Servoantrieb mit einem Elektromotor eine Lenkunterstützung über ein Getriebe bereitstellt. Über dem wenigstens annähernd gesamten Lenkwinkelbereich wird ein von dem Lenkwinkel und der aktuellen Drehzahl des Elektromotors des elektrischen Servoantriebs abhängiges Dämpfungsmoment auf den Elektromotor beaufschlagt.

Ferner sind bei modernen Kraftfahrzeugen zum Erreichen einer Kraftstoff- und CO₂-Einsparung automatische Start-Stopp-Funktionen umgesetzt, welche den Verbrennungsmotor des Kraftfahrzeugs bei Erreichen eines Stillstands automatisch abschalten und bei einem anschließenden Anfahrwunsch automatisch wieder starten.

Während einer Stopp-Phase soll das elektrische Servolenksystem hierbei weiterhin eine Lenkunterstützung bereitstellen. Bei einem Start des Verbrennungsmotors kommt es auf Grund einer hohen Leistungsaufnahme zu Einbrüchen der Versorgungsspannung des Bordnetzes des Kraftfahrzeugs. Das elektrische Servolenksystem muss auch für diesen Zeitraum eine Lenkunterstützung liefern und bei Lenkvorgängen ein haptisch unauffälliges Verhalten für den Fahrer zeigen.

Aus der WO 2016/005669 A1 ist ein Verfahren zum Betrieb eines elektrischen Servolenksystems eines Kraftfahrzeuges bekannt, bei dem mittels einer Lenkhandhabe ein Lenkradwinkel als Maß für einen gewünschten Radlenkwinkel für mindestens ein lenkbares Rad des Kraftfahrzeuges vorgegeben wird, wobei ein elektrischer Servoantrieb mit einem Elektromotor eine Lenkunterstützung bereitstellt, wobei ein Unterstützungsmoment der Lenkunterstützung reduziert wird, solange ein Start eines Verbrennungsmotors des Kraftfahrzeugs durchgeführt wird. Ähnliche Verfahren sind aus der EP 2 127 997 A2 oder der EP 2 918 478 A1 bekannt.

Der Erfindung liegt das technische Problem zu Grunde, ein Verfahren zum Betrieb eines elektrischen Servolenksystems eines Kraftfahrzeugs, ein elektrisches Servolenksystem für ein Kraftfahrzeug, ein Computerprogramm und ein Steuergerät eines Servolenksystems zu schaffen, bei denen eine Lenkunterstützung zuverlässiger zur Verfügung gestellt werden kann.

Die technische Aufgabe wird erfindungsgemäß durch ein Verfahren mit den Merkmalen des Patentanspruchs 1, ein elektrisches Servolenksystem mit den Merkmalen des Patentanspruchs 6, ein Computerprogramm mit den Merkmalen des Patentanspruchs 7 und ein Steuergerät für ein Servolenksystem mit den Merkmalen des Patentanspruchs 8 gelöst. Vorteilhafte Ausgestaltungen der Erfindung ergeben sich aus den Unteransprüchen.

Insbesondere wird ein Verfahren zum Betrieb eines elektrischen Servolenksystems eines Kraftfahrzeugs zur Verfügung gestellt, bei dem mittels einer Lenkhandhabe ein Lenkradwinkel als Maß für einen gewünschten Radlenkwinkel für mindestens ein lenkbares Rad des Kraftfahrzeugs vorgegeben wird, wobei ein elektrischer Servoantrieb mit einem Elektromotor eine Lenkunterstützung bereitstellt, und wobei ein Unterstützungsmoment der Lenkunterstützung in Abhängigkeit einer Dämpfungsfunktion reduziert wird, solange ein Start eines Verbrennungsmotors des Kraftfahrzeugs durchgeführt wird.

Ferner wird ein elektrisches Servolenksystem für ein Kraftfahrzeug geschaffen, umfassend eine Lenkhandhabe zur Vorgabe eines Lenkradwinkels als Maß für einen gewünschten Radlenkwinkel für mindestens ein lenkbares Rad des Kraftfahrzeugs, einen elektrischen Servoantrieb mit einem Elektromotor zum Bereitstellen einer Lenkunterstützung, und ein elektronisches Steuergerät für den elektrischen Servoantrieb, wobei das elektronische Steuergerät derart ausgebildet ist, ein Unterstützungsmoment der Lenkunterstützung in Abhängigkeit einer Dämpfungsfunktion zu reduzieren, solange ein Start eines Verbrennungsmotors des Kraftfahrzeugs durchgeführt wird.

Weiter wird ein Computerprogramm mit Programmcodemitteln geschaffen, um das beschriebene Verfahren durchzuführen, wenn das Programm auf einem Mikroprozessor eines Computers, insbesondere auf einem Steuergerät eines elektrischen Servolenksystems, ausgeführt wird.

Zugleich wird ein Steuergerät eines elektrischen Servolenksystems zur Verfügung gestellt, eingerichtet zur Durchführung des beschriebenen Verfahrens oder zur Ausführung eines Computerprogramms der vorgenannten Art.

Dabei wird ein bereitgestelltes Unterstützungsmoment einer Lenkunterstützung immer dann reduziert, wenn der Verbrennungsmotor des Kraftfahrzeugs gestartet wird. Eine solche Reduktion kann als Dämpfungsmoment aufgefasst werden. Insbesondere soll eine solche Reduktion durchgeführt werden, wenn ein Verbrennungsmotorstart im Rahmen der automatischen Start-Stopp-Funktion erkannt wird. Ab dem Beginn des Verbrennungsmotorstart wird hierzu das Unterstützungsmoment in Abhängigkeit einer Dämpfungsfunktion reduziert. Die Reduktion des Unterstützungsmoments hat den Vorteil, dass die Versorgungsspannung des Bordnetzes nicht weiter abfällt.

Elektronische Servolenksysteme arbeiten mit einem Elektromotor, der üblicherweise als eine permanent erregte Synchronmaschine ausgebildet ist, die über eine feldorientierte Regelung angesteuert wird. Wenn die Lenkung, bedingt durch einen Abfall der Versorgungsspannung beim Start des Verbrennungsmotors des Kraftfahrzeugs und gleichzeitiger Lenkbewegung mit hoher Lenkradwinkelgeschwindigkeit, im Feldschwächbetrieb arbeitet, wird neben dem Strom der q-Komponente ein hoher d-Lenkstrom aufgenommen.

Im Rahmen des beschriebenen Verfahrens ist es nun möglich, nicht nur den Strom der q-Komponente, sondern auch die d-Komponente des Lenkstroms zu reduzieren, indem hohe Lenkgeschwindigkeiten in Abhängigkeit eines erkannten Starts des Verbrennungsmotors und einer niedrigen Versorgungsspannung über eine Reduktion der Lenkunterstützung, welche als zusätzliche applizierbare Lenkungsdämpfung aufgefasst werden kann, vermieden werden.

Über eine sanft einsetzende Reduktion der Lenkunterstützung (entspricht einer Dämpfungsfunktion) sollen während des Starts des Verbrennungsmotors hohe Drehzahlen des Elektromotors und somit feldschwächende Ströme der d-Komponente reduziert werden. Bei sehr hohem Krafteinsatz des Fahrers, das heißt bei großem Handmoment an der Lenkhandhabe, können dennoch große Drehzahlen des Elektromotors erreicht werden. Jedoch kommt es hierbei sogar zu einer Stromrückspeisung ins Bordnetz des Kraftfahrzeugs, so dass die Versorgungsspannung nicht weiter abfällt.

Dies führt dazu, dass der Fahrer des Kraftfahrzeugs im relevanten Fall von kleiner Lenkradwinkelgeschwindigkeit auch bei niedriger Versorgungsspannung durch den Start des Verbrennungsmotors keine Einschränkung beim Lenkgefühl wahrnimmt.

Es ist vorgesehen, dass die Reduktion der bereitgestellten Lenkunterstützung ab dem Zeitpunkt aktiv sein soll, ab dem ein Start des Verbrennungsmotors des Kraftahrzeugs angekündigt ist. Eine solche Ankündigung kann beispielsweise ein entsprechendes Steuersignal sein, welches von einer Steuerung des Kraftfahrzeugs bereitgestellt wird. Ist der Start des Verbrennungsmotors erfolgreich abgeschlossen, so wird die Reduktion der bereitgestellten Lenkunterstützung wieder zurückgenommen.

Dabei ist vorgesehen, dass ein Wert des reduzierten Unterstützungsmoments in Abhängigkeit mindestens einer Zustandsgröße des Servolenksystems und/oder des Kraftfahrzeugs eingestellt wird. Eine Zustandsgröße ist hierbei ein Messwert oder ein Steuerparameter, welche zumindest teilweise einen aktuellen Zustand des Servolenksystems und/oder des Kraftfahrzeugs abbilden. Dies ermöglicht eine flexible Wahl eines oder mehrerer Eingangsparameter, welche zur Steuerung der Reduktion verwendet werden können.

Dabei ist die mindestens eine Zustandsgröße eine Rotorgeschwindigkeit und/oder eine Drehzahl des Elektromotors ist, wobei die Reduktion des Unterstützungsmoments umso größer ist, je größer die Rotorgeschwindigkeit bzw. die Drehzahl ist. Die Rotorgeschwindigkeit und/oder die Drehzahl des Elektromotors kann beispielsweise über eine entsprechend an dem Elektromotor angeordnete Sensorik erfasst werden oder auf Grundlage eines von einer Steuerung des Servoantriebs bereitgestellten Signals ermittelt oder geschätzt werden.

In einer Ausführungsform ist vorgesehen, dass mindestens eine weitere Zustandsgröße eine Versorgungsspannung des Servolenksystems oder eines Bordnetzes des Kraftfahrzeugs ist, wobei die Reduktion des Unterstützungsmoments umso größer ist, je niedriger die Versorgungsspannung ist. Die Versorgungsspannung kann entweder direkt an dem elektrischen Servolenksystem erfasst und in einen Messwert umgewandelt werden oder auch von einer Bordelektronik des Kraftfahrzeugs als Messwert bereitgestellt werden, beispielsweise über einen Kommunikationsbus (Controller Area Network, CAN etc.). Indem die Versorgungsspannung direkt als Eingangsparameter zum Steuern der Reduktion des Unterstützungsmoments verwendet wird, kann direkt auf einen Abfall der Versorgungsspannung reagiert werden, insbesondere auch unter Berücksichtigung der Höhe des Abfalls der Versorgungsspannung.

In einer Ausführungsform ist vorgesehen, dass eine Startdrehzahl des Elektromotors in Abhängigkeit vom Lenkradwinkel und/oder einer Versorgungsspannung des Servolenksystems oder eines Bordnetzes des Kraftfahrzeugs eingestellt wird. Dies ermöglicht es, bereits ab Beginn eines Lenkvorganges eine Reduktion der bereitgestellten Lenkunterstützung vornehmen zu können. Insbesondere lässt sich auf diese Weise auch eine sanft einsetzende Reduktion der Lenkunterstützung realisieren. Ferner kann der Lenkradwinkel berücksichtigt werden, da eine Lenkunterstützung bei kleinen Lenkradwinkeln anders bemessen sein kann als bei größeren Lenkradwinkeln.

Insbesondere kann bei einer Ausführungsform vorgesehen sein, dass die Startdrehzahl des Elektromotors umso kleiner ist, je größer der Lenkradwinkel und/oder je kleiner die Versorgungsspannung des Servolenksystems oder des Bordnetzes des Kraftfahrzeugs ist. Auf diese Weise kann ein haptisch natürliches Lenkgefühl erzeugt werden.

In einer weiteren Ausführungsform ist vorgesehen, dass nach dem Start des Verbrennungsmotors ein stetiges Überleiten in den Normalzustand durch stetiges Verringern der Reduktion des Unterstützungsmoments erfolgt. Dies erlaubt es, das normale Lenkgefühl, welches der Fahrer erfährt, behutsam wieder herzustellen. Idealerweise bekommt der Fahrer somit von der Reduktion der Lenkunterstützung nichts oder nur sehr wenig mit.

In einer weiteren Ausführungsform kann vorgesehen sein, dass das stetige Verringern der Reduktion des Unterstützungsmoments ohne Sprünge erfolgt. Ohne Sprünge soll hierbei bedeuten, dass der Übergang derart erfolgt, dass eine zugehörige Funktion stetig differenzierbar ist.

Es kann ferner vorgesehen sein, dass das stetige Verringern der Reduktion des Unterstützungsmoments mit einer vorgegebenen Steigung oder Änderungsrate erfolgt. Hierdurch wird ein sanftes Überleiten in den Normalzustand ermöglicht.

In einer weiteren Ausführungsform ist vorgesehen, dass die Reduktion des Unterstützungsmoments für eine vorgegebene Mindestzeit nach einem erfolgreichen und abgeschlossenen Start des Verbrennungsmotors des Kraftfahrzeugs noch nicht verringert wird, sondern dass das Unterstützungsmoment weiter reduziert bleibt. Dies hat den Vorteil, dass sich die Versorgungsspannung des Bordnetzes des Kraftfahrzeugs stabilisieren kann, bevor erneut eine höhere Leistungsaufnahme durch das Servolenksystem auftritt. Eine solche vorgegebene Mindestzeit kann beispielsweise im Millisekunden- bis Sekundenbereich liegen.

Insbesondere kann hierbei vorgesehen sein, dass ein Wert der vorgegebenen Mindestzeit in Abhängigkeit eines Minimalwertes der Versorgungsspannung, der während des Starts des Verbrennungsmotors aufgetreten ist, bestimmt wird. Hierdurch kann flexibel auf einen Ladezustand einer Batterie bzw. eine Stabilität des Bordnetzes reagiert werden. Hierfür wird der Minimalwert beispielsweise von dem Steuergerät erfasst und in einem Speicher zum späteren Abruf hinterlegt. Die vorgegebene Mindestzeit wird dann derart gewählt, dass die Mindestzeit umso länger ist, je niedriger der Minimalwert der Versorgungsspannung beim Start des Verbrennungsmotors war und/oder je instabiler das Bordnetz ist. Als Maß für eine Instabilität kann beispielsweise eine Schwankung der Versorgungsspannung des Bordnetzes über die Zeit dienen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform eines elektrischen Servolenksystems eines Kraftfahrzeugs;
- Fig. 2: eine schematische Darstellung eines Signalflussdiagramms zum Steuern der Reduktion eines bereitgestellten Unterstützungsmoments für eine einfache Ausführungsform;
- Fig. 3: eine schematische Darstellung eines Signalflussdiagramms zum Steuern der Reduktion eines bereitgestellten Unterstützungsmoments für eine weitere Ausführungsform;
- Fig. 4: ein schematisches Ablaufdiagramm einer Ausführungsform des Verfahrens zum Betrieb eines elektrischen Servolenksystems eines Kraftfahrzeugs.

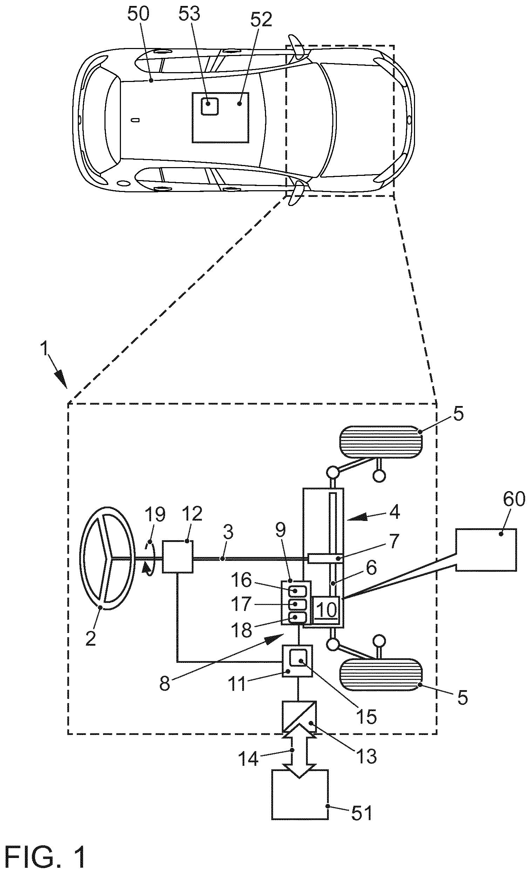

In Fig. 1 ist eine schematische Darstellung einer Ausführungsform eines elektrischen Servolenksystems 1 eines Kraftfahrzeugs 50 gezeigt. Das elektronische Servolenksystem 1 weist eine als Lenkrad ausgebildete Lenkhandhabe 2 auf. Die Lenkhandhabe 2 ist über eine Lenksäule 3 mit einem Lenkgetriebe 4 verbunden. Das Lenkgetriebe 4 dient dazu, einen Lenkradwinkel 19 über die Lenksäule 3 in einen Lenkwinkel von lenkbaren Rädern 5 des Kraftfahrzeugs 50 umzusetzen. Das Lenkgetriebe 4 weist hierzu eine Zahnstange 6 und ein Ritzel 7 auf, an welches die Lenksäule 3 angreift.

Darüber hinaus weist das elektrische Servolenksystem 1 einen elektrischen Servoantrieb 8 auf, welcher insbesondere der variablen Lenkunterstützung durch Bereitstellen eines zusätzlichen Unterstützungsmoments 60 dient. Der elektrische Servoantrieb 8 weist einen Elektromotor 9 zur Realisierung der Lenkunterstützung über ein Riemengetriebe 10 auf. Das Riemengetriebe 10 weist ein Antriebsritzel und eine Riemenscheibe zur Übertragung der Lenkunterstützung über ein Kugelumlaufgetriebe (in Fig. 1 nicht dargestellt) auf die Zahnstange 6 des elektrischen Servolenksystems 1 auf. Des Weiteren ist ein elektronisches Steuergerät 11 zur Ansteuerung und Regelung des Elektromotors 9 vorgesehen. Das Steuergerät 11 ist über eine Schnittstelle 13 und einen Kommunikationsbus 14 (z.B. CAN-Bus) des Kraftfahrzeugs 50 mit einer Bordelektronik 51 des Kraftfahrzeugs 50 verbunden. Der Aufbau des elektrischen Servolenksystems 1 ist nur beispielshaft und kann auch anders ausgebildet sein.

Empfängt die Schnittstelle 13 über den Kommunikationsbus 14 des Kraftfahrzeugs 50 von der Bordelektronik 51 eine Meldung, dass ein Start eines Verbrennungsmotors des Kraftfahrzeugs 50 bevorsteht, beispielsweise durch Empfang eines entsprechenden Startbefehls über den Kommunikationsbus 14, so leitet die Schnittstelle 13 diese Meldung an das Steuergerät 11 weiter. Das Steuergerät 11 reduziert dann ein Unterstützungsmoment 60 der Lenkunterstützung in Abhängigkeit einer Dämpfungsfunktion 15.

Dabei ist vorgesehen, dass die unabhängige(n) Variable(n) der Dämpfungsfunktion derart ausgebildet ist (sind), dass ein Wert des bereitgestellten Unterstützungsmoments 60 während des Starts des Verbrennungsmotors in Abhängigkeit mindestens einer Zustandsgröße des elektrischen Servolenksystems 1 und/oder des Kraftfahrzeugs 50 eingestellt wird.

Dabei ist vorgesehen, dass die mindestens eine Zustandsgröße eine Rotorgeschwindigkeit 16 und/oder eine Drehzahl 17 des Elektromotors 9 ist, wobei die Reduktion des Unterstützungsmoments 60 umso größer ist, je größer die Rotorgeschwindigkeit 16 bzw. die Drehzahl 17 ist.

Ferner kann hierbei zusätzlich auch vorgesehen sein, dass die mindestens eine Zustandsgröße eine Versorgungsspannung 53 des elektrischen Servolenksystems 1 oder eines Bordnetzes 52 des Kraftfahrzeugs 50 ist, wobei die Reduktion des Unterstützungsmoments 60 umso größer ist, je niedriger die Versorgungsspannung 53 ist. Der Wert der Versorgungsspannung 53 kann beispielsweise über eine entsprechende Sensorik direkt an dem elektrischen Servolenksystem 1 erfasst und bestimmt werden oder über eine Meldung, welche einen entsprechenden Messwert beinhaltet, über den Kommunikationsbus 14 und die Schnittstelle 13 abgefragt und empfangen werden und von dem Steuergerät 11 ausgewertet werden.

Es kann weiter zusätzlich vorgesehen sein, dass eine Startdrehzahl 18 des Elektromotors 9 in Abhängigkeit vom Lenkradwinkel 19 und/oder der Versorgungsspannung 53 des elektrischen Servolenksystems 1 oder des Bordnetzes 52 des Kraftfahrzeugs 50 eingestellt wird. Der Lenkradwinkel 19 wird beispielsweise an einer entsprechend hierfür ausgebildeten Sensorik 12, beispielsweise an einem Torsionsstab, erfasst und dem Steuergerät 11 zugeleitet.

Es kann hierbei insbesondere vorgesehen sein, dass die Startdrehzahl 53 des Elektromotors 9 von dem Steuergerät 11 umso kleiner eingestellt wird, je größer der Lenkradwinkel 19 und/oder je kleiner die Versorgungsspannung 53 des elektrischen Servolenksystems 1 ist.

Empfängt die Schnittstelle 13 anschließend eine Meldung, dass der Start des Verbrennungsmotors abgeschlossen ist, so verringert das Steuergerät 11 stetig die Reduktion des Unterstützungsmoments 60 und ermöglicht auf diese Weise ein stetiges Überleiten in den Normalzustand, in dem wieder die volle Lenkunterstützung bereitgestellt wird.

Es kann hierbei insbesondere vorgesehen sein, dass das stetige Verringern der Reduktion des Unterstützungsmoments 60 ohne Sprünge erfolgt. Ohne Sprünge soll hierbei bedeuten, dass der Übergang derart erfolgt, dass eine zugehörige Funktion stetig differenzierbar ist.

Es kann ferner vorgesehen sein, dass das stetige Verringern der Reduktion des Unterstützungsmoments 60 mit einer vorgegebenen Steigung bzw. Änderungsrate erfolgt. Hierdurch wird ein sanftes Überleiten in den Normalzustand ermöglicht.

Es kann weiter vorgesehen sein, dass die Reduktion des Unterstützungsmoments 60 für eine vorgegebene Mindestzeit nach einem erfolgreichen und abgeschlossenen Start des Verbrennungsmotors des Kraftfahrzeugs 50 noch nicht verringert wird, sondern dass das Unterstützungsmoment weiter reduziert bleibt, um das Bordnetz 52 des Kraftfahrzeugs 50 nach dem Start des Verbrennungsmotors zu stabilisieren. Eine solche vorgegebene Mindestzeit kann beispielsweise im Millisekunden- bis Sekundenbereich liegen.

Insbesondere kann hierbei zusätzlich vorgesehen sein, dass ein Wert der vorgegebenen Mindestzeit in Abhängigkeit eines Minimalwertes der Versorgungsspannung 53, der während des Starts des Verbrennungsmotors aufgetreten ist, bestimmt wird. Hierdurch kann flexibel auf einen Ladezustand einer Batterie bzw. eine Stabilität des Bordnetzes 52 reagiert werden. Der Minimalwert kann beispielsweise von dem Steuergerät 11 erfasst und in einem Speicher zum späteren Abruf hinterlegt werden. Die vorgegebene Mindestzeit wird dann derart gewählt, dass die Mindestzeit umso länger ist, je niedriger der Minimalwert der Versorgungsspannung 53 beim Start des Verbrennungsmotors war und/oder je instabiler das Bordnetz 52 ist.

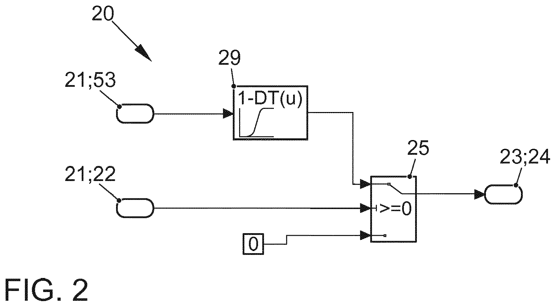

In Fig. 2 ist eine schematische Darstellung eines Signalflussdiagramms 20 zum Steuern der Reduktion des von dem Elektromotor bereitgestellten Unterstützungsmoments für eine einfache Ausführungsform dargestellt.

Eingangssignale 21 des Signalflussdiagramms 20 sind eine Versorgungsspannung 53 des elektrischen Servolenksystems oder des Bordnetzes des Kraftfahrzeugs, und ein Start-Stopp-Aktiv-Hinweis 22 (auch StartStop-Aktiv-Flag), welcher angibt, ob gerade ein Start des Verbrennungsmotors des Kraftfahrzeugs durchgeführt wird oder nicht. Einziges Ausgangssignal 23 ist ein Dämpfungsmoment 24, welches der Höhe der Reduktion des Unterstützungsmoments der Lenkunterstützung entspricht, das heißt je größer das Dämpfungsmoment 24, desto größer ist die Reduktion des Unterstützungsmoments. Das Signalflussdiagramm 20 ist hierbei unabhängig von der konkreten Ausbildung (d.h. analog und/oder digital) der Eingangssignale 21 und des Ausgangssignals 23 und dient lediglich der Veranschaulichung des Verfahrens.

Auf Grundlage des Start-Stopp-Aktiv-Hinweises 22 wird in einem Entscheidungsblock 25 entschieden, ob überhaupt eine Reduktion der Lenkunterstützung vorgenommen werden soll oder nicht. Ist der Start-Stopp-Aktiv-Hinweis 22 nicht gesetzt, das heißt, es wird aktuell kein Start des Verbrennungsmotors durchgeführt, beispielsweise weil dieser ausgeschaltet ist oder bereits läuft, so ist das Dämpfungsmoment 24 gleich Null.

Ist der Start-Stopp-Aktiv-Hinweis 22 hingegen gesetzt, das heißt, es wird aktuell ein Start des Verbrennungsmotors durchgeführt, dann wird das Dämpfungsmoment 24 in Abhängigkeit einer Kennlinie 29, welche die Dämpfungsfunktion darstellt, aus der Versorgungsspannung 53 berechnet. Die in der Fig. 2 dargestellte Kennlinie 29 ist hierbei lediglich symbolisch zu verstehen und kann einen anderen Verlauf aufweisen.

Weitere Eingangssignale 21, welche beim Festlegen des Dämpfungsmoments 24 berücksichtigt werden, sind eine Rotorgeschwindigkeit und/oder eine Drehzahl des Elektromotors. Weitere Eingangssignale können eine Startdrehzahl des Elektromotors und ein Lenkradwinkel sein.

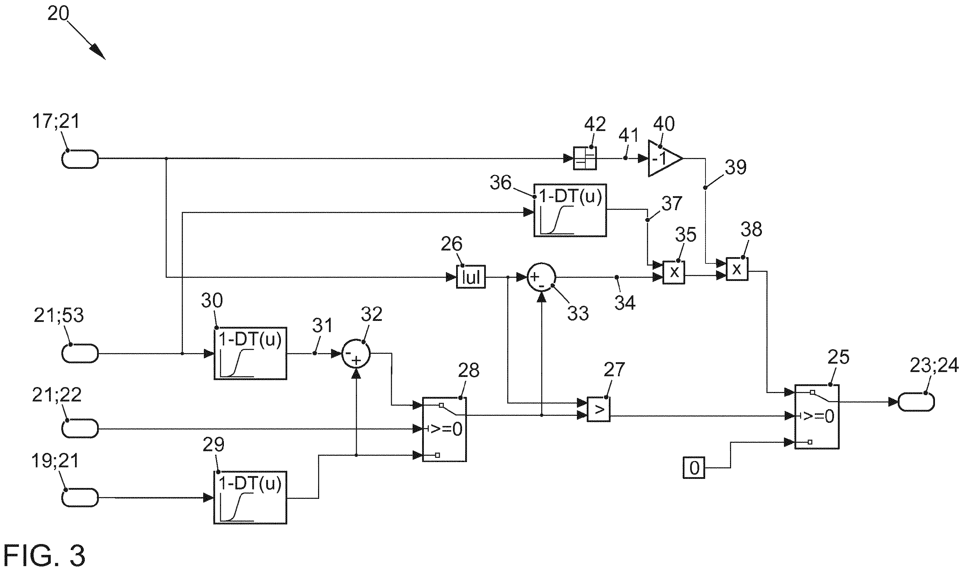

In Fig. 3 ist eine schematische Darstellung eines Signalflussdiagramms 20 zum Steuern der Reduktion des von dem Elektromotor bereitgestellten Unterstützungsmoments für eine weitere Ausführungsform dargestellt.

Eingangssignale 21 des Signalflussdiagramms 20 sind eine Drehzahl 17 des Elektromotors des Servoantriebs, eine Versorgungsspannung 53 des elektrischen Servolenksystems oder des Bordnetzes des Kraftfahrzeugs, ein Start-Stopp-Aktiv-Hinweis 22 (auch StartStop-Aktiv-Flag), welcher angibt, ob gerade ein Start des Verbrennungsmotors des Kraftfahrzeugs durchgeführt wird oder nicht, und ein Lenkradwinkel 19. Einziges Ausgangssignal 23 ist ein Dämpfungsmoment 24, welches der Höhe der Reduktion des Unterstützungsmoments der Lenkunterstützung entspricht. Das Signalflussdiagramm 20 ist hierbei unabhängig von der konkreten Ausbildung (d.h. analog und/oder digital) der Eingangssignale 21 und des Ausgangssignals 23 und dient lediglich der Veranschaulichung des Verfahrens.

Auf Grundlage der Drehzahl 17 des Elektromotors wird in einem Entscheidungsblock 25 entschieden, ob überhaupt eine Reduktion der Lenkunterstützung vorgenommen werden soll oder nicht. Hierzu wird in einem Absolutwertblock 26 ein Absolutwert der Drehzahl 17 gebildet, wobei davon ausgegangen wird, dass die Drehzahl 17 je nach Richtung ein anderes Vorzeichen aufweist. Der Absolutwert der Drehzahl 17 wird in einem Vergleicherblock 27 mit einem Wert für die Startdrehzahl 18 verglichen.

Dieser Wert für die Startdrehzahl 18 wird wie folgt bestimmt: In einem Entscheiderblock 28 wird in Abhängigkeit des Wertes für den Start-Stopp-Aktiv-Hinweis 22 zwischen zwei Alternativen zum Bestimmen der Startdrehzahl 18 gewählt. Ist der Start-Stopp-Aktiv-Hinweis 22 nicht gesetzt, das heißt es liegt aktuell kein Start des Verbrennungsmotors des Kraftfahrzeugs vor, so wird ein Betrag der Startdrehzahl 18 auf Grundlage einer Kennlinie 29 aus dem Lenkradwinkel 19 bestimmt. Ist der Start-Stopp-Aktiv-Hinweis 22 hingegen aktiv, so wird auf Grundlage einer weiteren Kennlinie 30 aus der Versorgungsspannung 53 ein Betrag für einen Offset 31 der Startdrehzahl 18 gebildet, welcher in einem Knoten 32 von der mittels der Kennlinie 29 aus dem Lenkradwinkel 19 bestimmten Startdrehzahl abgezogen wird und am Ausgang des Entscheiderblocks 28 bereitgestellt wird.

Ist der absolute Wert der Drehzahl 17 des Elektromotors kleiner als die Startdrehzahl 18, so wird vom Vergleicherblock 27 ein Wert "0" ausgeben. Ist der absolute Wert der Drehzahl 17 des Elektromotors hingegen größer als die Startdrehzahl 18, so wird vom Vergleicherblock 27 ein Wert "1" ausgeben. Ist der Wert gleich "0", so wird das Dämpfungsmoment 24 vom Entscheiderblock 25 gleich Null gesetzt. Ist der Wert hingegen "1", so wird ein Dämpfungsmoment 24 ungleich Null ausgegeben.

Ist das Dämpfungsmoment 24 ungleich Null, so berechnet sich der Wert des Dämpfungsmoments 24 wie folgt: In einem weiteren Knoten 33 wird aus dem Betrag der Drehzahl 17 des Elektromotors und der bestimmten Startdrehzahl 18 eine Regeldifferenz 34 bestimmt. Diese Regeldifferenz 34 wird in einem Multiplikationsblock 35 mit einer mittels einer Kennlinie 36 aus der Versorgungsspannung 53 bestimmten Regelverstärkung 37 multipliziert. Anschließend wird das Produkt in einem weiteren Multiplikationsblock 38 zum Festlegen eines Vorzeichens des resultierenden Dämpfungsmoments 24 mit einem Vorzeichenfaktor 39 multipliziert, wobei der Vorzeichenfaktor 39 aus einem in einem Invertierblock 40 invertierten Vorzeichen 41 der Drehzahl 17 des Elektromotors bestimmt wird. Das Vorzeichen 41 der Drehzahl 17 des Elektromotors wird hierzu in einem Vorzeichenbestimmungsblock 42 ermittelt.

Die in der Fig. 3 dargestellten Kennlinien 29, 30, 36 sind lediglich symbolisch zu verstehen und können andere Verläufe aufweisen.

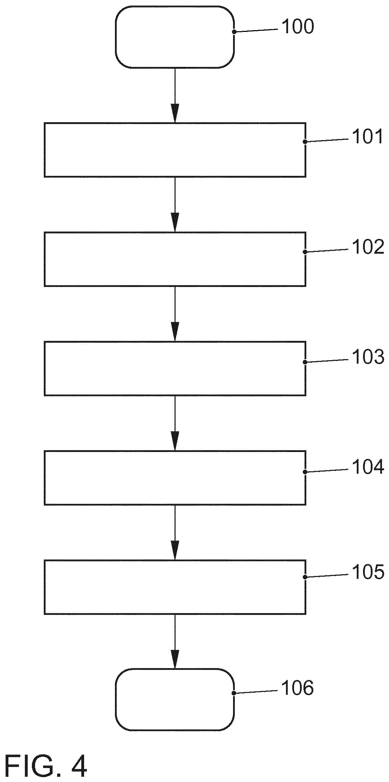

In Fig. 4 ist ein schematisches Ablaufdiagramm einer Ausführungsform des Verfahrens zum Betrieb eines elektrischen Servolenksystems eines Kraftfahrzeugs gezeigt. Nach dem Start 100 des Verfahrens wird in einem Verfahrensschritt 101 ein Unterstützungsmoment zur Lenkunterstützung durch das elektrische Servolenksystem bereitgestellt.

Wird in einem Verfahrensschritt 102 erkannt, dass ein Start eines Verbrennungsmotors durchgeführt wird, so wird anschließend das Unterstützungsmoment der Lenkunterstützung in Abhängigkeit einer Dämpfungsfunktion im Verfahrensschritt 103 reduziert.

Wird anschließend im Verfahrensschritt 104 erkannt, dass der Start des Verbrennungsmotors abgeschlossen ist, so wird das Unterstützungsmoment der Lenkunterstützung im Verfahrensschritt 105 wieder auf den ursprünglichen Wert erhöht. Anschließend ist das Verfahren beendet 106.

### Bezugszeichenliste

- 1: elektrisches Servolenksystem
- 2: Lenkhandhabe
- 3: Lenksäule
- 4: Lenkgetriebe
- 5: Rad
- 6: Zahnstange
- 7: Ritzel
- 8: Servoantrieb
- 9: Elektromotor
- 10: Getriebe
- 11: Steuergerät
- 12: Sensorik
- 13: Schnittstelle
- 14: Kommunikationsbus
- 15: Dämpfungsfunktion
- 16: Rotorgeschwindigkeit
- 17: Drehzahl
- 18: Startdrehzahl
- 19: Lenkradwinkel
- 20: Signalflussdiagramm
- 21: Eingangssignal
- 22: Start-Stopp-Aktiv-Hinweis
- 23: Ausgangssignal
- 24: Dämpfungsmoment
- 25: Entscheiderblock
- 26: Absolutwertblock
- 27: Vergleicherblock
- 28: Entscheiderblock
- 29: Kennlinie
- 30: Kennlinie
- 31: Offset
- 32: Knoten
- 33: Knoten
- 34: Regeldifferenz
- 35: Multiplikationsblock
- 36: Kennlinie
- 37: Regelverstärkung
- 38: Multiplikationsblock
- 39: Vorzeichenfaktor
- 40: Invertierblock
- 41: Vorzeichen
- 42: Vorzeichenbestimmungsblock
- 50: Kraftfahrzeug
- 51: Bordelektronik
- 52: Bordnetz
- 53: Versorgungsspannung
- 60: Unterstützungsmoment

## Patentansprüche

1. Verfahren zum Betrieb eines elektrischen Servolenksystems (1) eines Kraftfahrzeugs (50), bei dem mittels einer Lenkhandhabe (2) ein Lenkradwinkel (19) als Maß für einen gewünschten Radlenkwinkel für mindestens ein lenkbares Rad (5) des Kraftfahrzeugs (50) vorgegeben wird, wobei ein elektrischer Servoantrieb (8) mit einem Elektromotor (9) eine Lenkunterstützung bereitstellt, wobei
ein Unterstützungsmoment (60) der Lenkunterstützung in Abhängigkeit einer Dämpfungsfunktion (15) reduziert wird, solange ein Start eines Verbrennungsmotors des Kraftfahrzeugs (50) durchgeführt wird,
**dadurch gekennzeichnet, dass**
ein Wert des reduzierten Unterstützungsmoments (60) in Abhängigkeit mindestens einer Zustandsgröße des Servolenksystems (1) und/oder des Kraftfahrzeugs (50) eingestellt wird, wobei die mindestens eine Zustandsgröße eine Rotorgeschwindigkeit (16) und/oder eine Drehzahl (17) des Elektromotors (9) ist, wobei
die Reduktion des Unterstützungsmoments (60) umso größer ist, je größer die Rotorgeschwindigkeit (16) bzw. die Drehzahl (17) ist.

2. Verfahren nach Anspruch 1, **dadurch gekennzeichnet, dass** mindestens eine weitere Zustandsgröße eine Versorgungsspannung (53) des Servolenksystems (1) oder eines Bordnetzes (52) des Kraftfahrzeugs (50) ist, wobei die Reduktion des Unterstützungsmoments (60) umso größer ist, je niedriger die Versorgungsspannung (53) ist.

3. Verfahren nach einem der vorangegangenen Ansprüche, **dadurch gekennzeichnet, dass** eine Startdrehzahl (18) des Elektromotors (9) in Abhängigkeit vom Lenkradwinkel (19) und/oder einer Versorgungsspannung (53) des Servolenksystems (1) oder eines Bordnetzes (52) des Kraftfahrzeugs (50) eingestellt wird.

4. Verfahren nach Anspruch 3, **dadurch gekennzeichnet, dass** die Startdrehzahl (18) des Elektromotors (9) umso kleiner ist, je größer der Lenkradwinkel (19) und/oder je kleiner die Versorgungsspannung (53) des Servolenksystems (1) oder des Bordnetzes (52) des Kraftfahrzeugs (50) ist.

5. Verfahren nach einem der vorangegangenen Ansprüche, **dadurch gekennzeichnet, dass** nach dem Start des Verbrennungsmotors ein stetiges Überleiten in den Normalzustand durch stetiges Verringern der Reduktion des Unterstützungsmoments (60) erfolgt.

6. Elektrisches Servolenksystem (1) für ein Kraftfahrzeug (50), umfassend:
eine Lenkhandhabe (2) zur Vorgabe eines Lenkradwinkels (19) als Maß für einen gewünschten Radlenkwinkel für mindestens ein lenkbares Rad (5) des Kraftfahrzeugs (50),
einen elektrischen Servoantrieb (8) mit einem Elektromotor (8) zum Bereitstellen einer Lenkunterstützung, und
ein elektronisches Steuergerät (11) für den elektrischen Servoantrieb (8), wobei das elektronische Steuergerät (11) derart ausgebildet ist, ein Unterstützungsmoment (60) der Lenkunterstützung in Abhängigkeit einer Dämpfungsfunktion (15) zu reduzieren, solange ein Start eines Verbrennungsmotors des Kraftfahrzeugs (50) durchgeführt wird.
**dadurch gekennzeichnet, dass**
das elektrische Steuergerät (11) derart ausgebildet ist, dass ein Wert des reduzierten Unterstützungsmoments (60) in Abhängigkeit mindestens einer Zustandsgröße des Servolenksystems (1) und/oder des Kraftfahrzeugs (50) eingestellt wird, wobei die mindestens eine Zustandsgröße eine Rotorgeschwindigkeit (16) und/oder eine Drehzahl (17) des Elektromotors (9) ist, wobei
die Reduktion des Unterstützungsmoments (60) umso größer ist, je größer die Rotorgeschwindigkeit (16) bzw. die Drehzahl (17) ist.

7. Computerprogramm mit Programmcodemitteln, um ein Verfahren gemäß einem der Ansprüche 1 bis 5 durchzuführen, wenn das Programm auf einem Mikroprozessor eines Computers, insbesondere auf einem Steuergerät (11) eines elektrischen Servolenksystems (1), ausgeführt wird.

8. Steuergerät (11) eines elektrischen Servolenksystems (1), eingerichtet zur Durchführung eines Verfahrens nach einem der Ansprüche 1 bis 5 oder zur Ausführung eines Computerprogramms nach Anspruch 7.

## Claims

1. Method for operating an electric power steering system (1) of a motor vehicle (50), in which method a steering wheel angle (19) is predefined by means of a steering handle (2) as a measure of a desired wheel steering angle for at least one steerable wheel (5) of the motor vehicle (50), an electric servo drive (8) with an electric motor (9) providing steering assistance, an assistance torque (60) of the steering assistance being reduced in a manner which is dependent on a damping function (15) as long as starting of an internal combustion engine of the motor vehicle (50) is being carried out, **characterized in that** a value of the reduced assistance torque (60) is set in a manner which is dependent on at least one state variable of the power steering system (1) and/or the motor vehicle (50), the at least one state variable being a rotor speed (16) and/or a rotational speed (17) of the electric motor (9), the reduction of the assistance torque (60) being greater, the greater the rotor speed (16) and/or the rotational speed (17).

2. Method according to Claim 1, **characterized in that** at least one further state variable is a supply voltage (53) of the power steering system (1) or an on-board electric system (52) of the motor vehicle (50), the reduction of the assistance torque (60) being greater, the lower the supply voltage (53).

3. Method according to one of the preceding claims, **characterized in that** a starting rotational speed (18) of the electric motor (9) is set in a manner which is dependent on the steering wheel angle (19) and/or a supply voltage (53) of the power steering system (1) or an on-board electric system (52) of the motor vehicle (50) .

4. Method according to Claim 3, **characterized in that** the starting rotational speed (18) of the electric motor (9) is lower, the greater the steering wheel angle (19) and/or the lower the supply voltage (53) of the power steering system (1) or the on-board electric system (52) of the motor vehicle (50).

5. Method according to one of the preceding claims, **characterized in that**, after the starting of the internal combustion engine, a continuous transfer into the normal state takes place by way of a continuous decrease of the reduction of the assistance torque (60).

6. Electric power steering system (1) for a motor vehicle (50), comprising:
a steering handle (2) for predefining a steering wheel angle (19) as a measure of a desired wheel steering angle for at least one steerable wheel (5) of the motor vehicle (50),
an electric servo drive (8) with an electric motor (8) for providing steering assistance, and
an electronic control unit (11) for the electric servo drive (8),
the electronic control unit (11) being configured so as to reduce an assistance torque (60) of the steering assistance in a manner which is dependent on a damping function (15) as long as starting of an internal combustion engine of the motor vehicle (50) is being carried out, **characterized in that** the electronic control unit (11) is configured so that a value of the reduced assistance torque (60) is set in a manner which is dependent on at least one state variable of the power steering system (1) and/or the motor vehicle (50), the at least one state variable being a rotor speed (16) and/or a rotational speed (17) of the electric motor (9), the reduction of the assistance torque (60) being greater, the greater the rotor speed (16) and/or the rotational speed (17).

7. Computer program having program code means, in order to carry out a method according to one of Claims 1 to 5 when the program is executed on a microprocessor of a computer, in particular on a control unit (11) of an electric power steering system (1).

8. Control unit (11) of an electric power steering system (1), set up for carrying out a method according to one of Claims 1 to 5 or for executing a computer program according to Claim 7.

## Revendications

1. Procédé de fonctionnement d'un système de direction assistée électrique (1) d'un véhicule automobile (50), procédé dans lequel un angle de volant (19) est spécifié comme mesure d'un angle de braquage souhaité d'au moins une roue directrice (5) du véhicule automobile (50) au moyen d'un manche de direction (2), un servomoteur électrique (8) pourvu d'un moteur électrique (9) fournissant une aide à la direction,
un couple d'aide (60) de l'aide à la direction étant réduit en fonction d'une fonction d'amortissement (15) tant qu'un démarrage d'un moteur à combustion interne du véhicule automobile (50) est effectué,
**caractérisé en ce que**
une valeur du couple d'aide réduit (60) est établie en fonction d'au moins une grandeur d'état du système de direction assistée (1) et/ou du véhicule automobile (50), l'au moins une grandeur d'état étant une vitesse de rotor (16) et/ou une vitesse de rotation (17) du moteur électrique (9),
plus la réduction du couple d'aide (60) est importante, plus la vitesse de rotor (16) ou la vitesse de rotation (17) est grande.

2. Procédé selon la revendication 1, **caractérisé en ce qu'**au moins une autre grandeur d'état est une tension d'alimentation (53) du système de direction assistée (1) ou d'un système de bord (52) du véhicule automobile (50), la réduction du couple d'aide (60) étant d'autant plus importante que la tension d'alimentation (53) est faible.

3. Procédé selon l'une des revendications précédentes, **caractérisé en ce qu'**une vitesse de rotation de démarrage (18) du moteur électrique (9) est réglée en fonction de l'angle de volant (19) et/ou d'une tension d'alimentation (53) du système de direction assistée (1) ou d'un réseau de bord (52) du véhicule automobile (50).

4. Procédé selon la revendication 3, **caractérisé en ce que** la vitesse de rotation de démarrage (18) du moteur électrique (9) est d'autant plus petite que l'angle de volant (19) est grand et/ou que la tension d'alimentation (53) du système de direction assistée (1) ou du réseau de bord (52) du véhicule automobile (50) est petite.

5. Procédé selon l'une des revendications précédentes, **caractérisé en ce que**, après le démarrage du moteur à combustion interne, une transition constante vers l'état normal est effectuée par réduction continue du couple d'aide (60).

6. Système de direction assistée électrique (1) destiné à un véhicule automobile (50), ledit système comprenant :
un manche de direction (2) destiné à spécifier un angle de volant (19) comme mesure d'un angle de braquage souhaité d'au moins une roue directrice (5) du véhicule automobile (50),
un servomoteur électrique (8) pourvu d'un moteur électrique (8) et destiné à fournir une aide à la direction, et
un dispositif de commande électronique (11) destiné à la servocommande électrique (8), le dispositif de commande électronique (11) étant conçu pour réduire un couple d'aide (60) de l'aide de direction en fonction d'une fonction d'amortissement (15) tant qu'un démarrage d'un moteur à combustion du véhicule automobile (50) est effectué,
**caractérisé en ce que**
le dispositif de commande électrique (11) est conçu de telle sorte qu'une valeur du couple d'aide réduit (60) soit réglée en fonction d'au moins une grandeur d'état du système de direction assistée (1) et/ou du véhicule automobile (50), l'au moins une grandeur d'état étant une vitesse de rotor (16) et/ou une vitesse de rotation (17) du moteur électrique (9), dans lequel
plus la vitesse de rotor (16) ou la vitesse de rotation (17) est élevée, plus la réduction du couple d'aide (60) est importante.

7. Logiciel comprenant des codes de programme pour mettre en œuvre un procédé selon l'une des revendications 1 à 5 lorsque le programme est exécuté sur un microprocesseur d'un ordinateur, notamment sur une unité de commande (11) d'un système de direction assistée électrique (1).

8. Dispositif de commande (11) d'un système de direction assistée électrique (1), conçu pour mettre en œuvre un procédé selon l'une des revendications 1 à 5 ou pour exécuter un logiciel selon la revendication 7.
